# EUROPÄISCHE PATENTANMELDUNG

(11) **EP 3 109 217 A1**
(43) Veröffentlichungstag der Anmeldung: **28.12.2016**
(21) Anmeldenummer: 16169501.0
(22) Anmeldetag: 13.05.2016
(51) Int. Cl.: C04B 28/00, C04B 28/26

(54) **STABILE FORMKÖRPER ODER PLATTEN ZUR WÄRMEDÄMMUNG UND FÜR DEN BRANDSCHUTZ, DAS VERFAHREN ZU IHRER HERSTELLUNG UND IHRE VERWENDUNG SOWIE BAUWERK DARAUS**

(30) Priorität: 22.06.2015 CH 8982015
(71) Anmelder: Sterrer, Manfred, 4863 Seewalchen (AT); Scherer, Josef, 6440 Brunnen (CH); Maier, Martin, 79258 Hartheim-Bremgarten (DE)
(72) Erfinder: Sterrer, Manfred, 4863 Seewalchen (AT); Scherer, Josef, 6440 Brunnen (CH); Maier, Martin, 79258 Hartheim-Bremgarten (DE); Sterrer, Petra, 4863 Seewalchen (AT)
(74) Vertreter: Felber, Josef

(57) **Zusammenfassung**

Die stabile Formkörper und Platten werden als Leichtbaumaterial zur Wärmedämmung und zur Verwendung als Brandschutz eingesetzt. Sie sind einzig aus einem mineralischen Bindemittel mit chemischen Zusätzen hergestellt. Diese chemischen Zusätzen schliessen einerseits ein Hydrophobierungsmittel ein, und andererseits ein Sauerstoffbindemittel, zum Beispiel Wasserstoffperoxid, welches beim Anmachen mit Wasser Sauerstoff ausscheidet und einen Schäumungseffekt bewirkt. Dazu kommt ein Katalysator, zum Beispiel Braunstein, für die Beschleunigung der Schäumung. Damit wird erzielt, dass die Dichte des getrockneten Produktes zwischen 40 bis 120 Gramm/Liter liegt und einen LambdaWert unter 0.055 mW/mK aufweist. Die Verwendung der stabilen Formkörpern und Platten dient zum Erstellen von Wandaufbauten innen oder aussen an Gebäuden, indem Dämmplatten (8) auf eine gesäuberte, mit einem Putz egalisierte und hernach mit Klebemörtel versehene Innen- oder Aussenwand eines Gebäudes appliziert werden, bedarfsweise mechanisch an der Gebäudewand (3) fixiert werden und hernach ein Unterputz (9) mit Armierungsgewebe-Gitter (10) auf Glasbasis aufgetragen wird und schliesslich ein Oberputz aufgebracht wird, der wahlweise mit einem Farbanstrich versehen wird. Es können auch ganze Bauwerke ganz oder teilweise mit diesen Formkörpern erstellt werden, zum Beispiel Bootsstege und Bojen etc.

## Beschreibung

Diese Erfindung betrifft spezielle stabile Formkörper oder stabile Platten als Leichtbaumaterial für Anwendungen aller Art und insbesondere wenn als Platten ausgeführt zum Verbauen als Innen- und Aussenwärmedämmung von Bauwerken. Die Platten und Formkörper sind auch für den Brandschutz vielseitig einsetzbar. Andererseits betrifft die Erfindung das Verfahren zur Herstellung dieser stabilen Formkörper und Platten, ihre Verwendung und schliesslich Bauwerke, die aus solchen Formkörpern oder Platten bestehen oder solche enthalten, oder Bauwerke, an denen Aussen- oder Innenwände damit gegen den Wärmedurchgang ausgerüstet sind, d.h. in branchenüblicher Ausdruckweise "isoliert" sind - das heisst wärmegedämmt sind.

Altbauten sind zwar oftmals schön - manchmal eigentliche Baudenkmäler - aber sie weisen meist eine schlecht wärmedämmende Bauhülle auf und sind allgemeinen schwer nachträglich zu dämmen. Die Entwicklung effizienter Dämmsysteme, etwa eines guten wärmedämmenden Dämmputzes oder gut wärmedämmender Dämmplatten ist daher eine Herausforderung. Heute gibt es Dämmputze und Dämmplatten auf der Basis von Aerogel, die doppelt so gut Wärme dämmen wie sonst übliche Dämmputzsorten. Der Referenzwert für die Dämmung ist der Wärmedurchlass und dieser wird als Wärmeleitzahl oder Lambda-Wert (λ = Lambda) ausgedrückt. Aerogel-Dämmputze weisen eine Wärmleitzahl bzw. einen Lambda-Wert von 30 mW/mK auf, als reiner Laborwert, und Dämmplatten aus Aerogel-Vlies einen solchen von 12 bis 15 mW/mK. Diese Aerogel-Dämmplatten sind daher wesentlich effizienter. Dazu kommt, dass der Aerogel-Dämmputz, wenn er gepumpt wird, seine Wirkung teilweise verliert, weil der Aerogel durch die Pumpe mechanisch gestresst wird.

In der Schweiz als Beispiel gibt es etwa 1.5 Millionen Altbauten. Mit dieser Bausubstanz muss gelebt werden, ja man will sie oft bewusst erhalten. Doch zugleich steigt der Energieverbrauch des Landes. 4.5 Millionen Tonnen leichtes Heizöl und 3 Millionen Kubikmeter Erdgas werden laut dem Schweizer Bundesamt für Energie jährlich importiert. 43 Prozent davon werden für das Heizen von Gebäuden verbrannt. Um sparsamer mit diesen Energieträgern umzugehen, führt kein Weg um eine bessere Isolation dieser alten Häuser herum. Ähnliche Verhältnisse herrschen in manchen anderen Ländern mit ähnlichen Klimabedingungen vor. Wie dämmt man aber einen historischen Altbau - sei es nun ein Riegelhaus, ein Haus aus der Art-Deco-Epoche, oder ein altes Bürgerhaus? Der Heimatschutz erlaubt es nicht, historische Fassade einfach mit modernen Dämmplatten einzupacken.

Um die Optik einer alten Hauswand zu erhalten, eignet sich ein Verputz am besten. Das Auskleiden von verwinkelten Treppenhäusern, Rundbögen und Stützmauern mit herkömmlichen dicken Dämmplatten ist zuweilen aufwändig. Eine Verkleidung aus Dämmputz lässt sich besonders an verwinkelten Bereichen entschieden einfacher anbringen. Ausserdem liegt der Putz direkt auf dem Mauerwerk auf und lässt keine Lücken frei, in denen Feuchtigkeit kondensieren kann. In der Praxis greift man deshalb oft auf Kombinationen von Dämmplatten und Dämmputzen zurück. Grosse, ebene Flächen werden mit Dämmplatten verkleidet, verwinkelte Bereiche des Baukörpers hingegen mit Dämmputz versehen.

Einer der besten, wenn nicht der allerbeste Dämmstoff, der industriell hergestellt werden kann, ist Aerogel. Das Material, wegen seiner Optik auch als «gefrorener Rauch» bekannt, besteht zu rund 5 Prozent aus Silikat - der Rest ist Luft. Aerogel wurde bereits in den Sechzigerjahren zur Dämmung von Raumanzügen eingesetzt und brachte es auf 15 Einträge im Guinness-Buch der Rekorde, darunter denjenigen als «bester Isolator» und «leichtester Feststoff», mit Wärmeleitzahlen bzw. Lambda-Werten von 2 bis 5 mW/(mK). Im Baubereich wird Aerogel bereits eingesetzt, etwa als einblasbarer Dämmstoff für Mauer-Zwischenräume oder in Form von Dämmplatten aus Faserflies. Tatsächlich sind Aerogel-Kügelchen extrem leicht, fast gewichtslos und sie lassen sich zwischen Daumen und Zeigefinger festhalten. Doch sobald man die Finger aneinander reibt, zerbröseln diese Kügelchen. Nach zwei, drei Bewegungen ist nur noch ein feines Pulver übrig. Wenn das Pulver sachte mit Wasser angerührt wird und der damit versetzte Putz von Hand aufgetragen wird, lassen sich zwar gute Ergebnisse erzielen, aber wenn der Putz mit einem Druck von 5 bis 20 bar durch den Schlauch einer professionellen Putzmaschine gepumpt wird, so zerstört die mechanische Beanspruchung den Aerogel und seine wärmedämmende Wirkung. Aerogel müsste daher in so einer Weise in den Putz integriert werden, dass seine Wirkung auch beim maschinellen Pumpen des Dämmputzes erhalten bleibt. Laborproben dieses von der Eidgenössischen Material-Prüfungs-Anstalt EMPA in CH-Dübendorf entwickelten Aerogel-Putzes ergaben eine Wärmeleitfähigkeit λ von 30 mW/(mK). Damit dämmt dieser Aerogel-Dämmputz die Wärme mehr als doppelt so gut herkömmlicher Dämmputz und ist vergleichbar oder gar noch besser dämmend als eine Platte aus extrudiertem Polystyrol (EPS). Die herkömmlichen Dämmputze weisen Wärmeleitzahlen bzw. Lambda-Werte zwischen 65 und 90 mW/(mK) auf, die schlechtesten bloss einen λ-Wert von 110 oder 130 mW/(mK).

Zur praktischen Applikation wird der Aerogel-Dämmputz mit einer Verputzmaschine auf das Mauerwerk aufgespritzt und anschliessend glatt gezogen. Dieser weiche Dämmputz muss anschliessend in einem weiteren Arbeitsgang mit einem gewebearmierten Einbettmörtel geschützt werden. Es hat sich allerdings gezeigt, dass ein Aerogel als gepumpter Putz aufgebracht, deutlich mehr Wärme durchlässt, vor allem wenn die Pumpstrecke lang ist. Aufgrund der mechanischen Beanspruchung des Aerogels in der Pumpe fällt seine Wirkung zusammen und die Wärmeleitzahl bzw. der Lambda-Wert steigt. Bei einer 30 Meter langen Pumpleitung steigt der Wärmedurchlass und somit die Wärmeleitzahl bzw. der Lambda-Wert von sonst 30 auf 40 bis 45 mW/mK.

Wärmedämmplatten andererseits erleiden durch ihre Montage keine Verschlechterung ihres λ-Wertes. Eine Aerogel-Platte bringt einen λ-Wert von 15 bis 20 mW/mK, ist also besser als eine extrudierte Polystyrol Platte (EPS-Platte) mit ihrem λ-Wert von 33 mW/mK. Wenngleich nicht überall Wärmedämmplatten einsetzbar sind, so sind solche doch in vielen Situationen ideal, denn sie bieten einen tiefen λ-Wert. Aerogel-Platten oder Aerogel-Dämmputze sind im Allgemeinen sehr teuer. Könnte man eine Wärmedämmplatte mit vergleichbaren λ-Werten zu wesentlich tieferen Preisen einsetzen, so wäre eine solche für sehr viele Anwendungen hoch interessant. Eine dünne und leichte Dämmplatte kann grundsätzlich rasch und einfach verbaut werden und sie lässt sich beliebig zuschneiden.

Anders als bei Wärmedämmplatten geht es beim Brandschutz darum, eine grosse Hitze - hohe Temperaturen - infolge eines Brandes auf der einen Seite der Brandschutzplatte möglichst lange von der andere Seite der Brandschutzplatte fernzuhalten. Hier spielt die Dichte der Platte eine andere Rolle. Sie sollte hoch sein, damit die Platte aufgrund ihres Materials und dessen Masse im Brandfall eine endotherme Reaktion aufweist, dass heisst bei Hitzeeinwirkung grosse Energiebeträge aufnehmen kann, aufgrund der Abspaltung von großen Mengen an Wasser und anderen Reaktionsprodukten. Eine Kühlwirkung des Systems ist die Folge. Herkömmlich setzt man dazu als Basismaterial zum Beispiel Werkstoffe auf der Basis von Gips, Calziumsilikat, Blähglimmer, Blähton ein. Als Bindemittel dienen Wasserglas, Gips, Phosphate und Zement, im Speziellen Magnesiumzement oder Glaszement. Eine Brandschutzplatte sollte so leicht wie möglich und aber unbedingt so schwer wie nötig sein, bei bestmöglichen Brandschutz-Eigenschaften.

Bekannt sind stabile Formkörper und Platten als Leichtbaumaterial, zur Wärmedämmung und zur Verwendung als Brandschutz auf der Grundlage von geblähtem Perlit, mit einem Anteil mit Luft gefüllter Kugeln aus expandierten, geschlossenzelligen Silicasanden, welche Kugeln eine Druckfestigkeit von mindestens 0.4 N/mm² und im trockenen Zustand eine Schütt-Dichte von 50 bis 400 Gramm/Liter aufweisen. Deren Restvolumen besteht aus einem Bindemittel. Dieses Bindemittel kann mit einem Schäumungsmittel versetzt sein, sodass die Formkörper oder Platten als Ganzes je nach spezifischer Zusammensetzung aller Komponenten infolge der Luft in den geblähten Perliten sowie der Luft aus dem Schäumungsmittel eine Dichte von zwischen 120kg/m³ bis 1200kg/m³ aufweisen. Wahlweise können eine oder mehrere Oberflächen des Körpers mit einem Hydrophobierungsmittel imprägniert sein. Derartige Platten weisen wohl gute Wärmedämmeigenschaften auf und sind auch sehr leicht. Die vorgängige Herstellung von geschlossenzelligen geblähten Perliten ist allerdings aufwändig und entsprechend teuer. Bisher ging man davon aus, dass der Einsatz von Perliten unerlässlich sei, um auf die tiefen Dichten zu kommen und auch um diese guten Wärmedämmeigenschaften zu erzielen. Aerogel-Dämmputze kommen in der Theorie bzw. im Labor auf Lambda-Werte von 2 bis 5 mW/(mK). Werden Sie allerdings wie in der Praxis üblich über eine 30 Meter lange Pumpleitung auf eine Wand appliziert, so steigt der Wärmedurchlass und somit die Wärmeleitzahl bzw. der Lambda-Wert von sonst 30 auf 40 bis 45 mW/mK. Und herkömmliche Dämmputze weisen Wärmeleitzahlen bzw. Lambda-Werte zwischen 65 und 90 mW/(mK) auf, die schlechtesten bloss einen λ-Wert von 110 oder 130 mW/(mK).

Die Aufgabe dieser Erfindung ist es daher, stabile Förmkörper und Platten als Leichtbaumaterial, zur Wärmedämmung oder zur Verwendung als Brandschutz zu schaffen, sowie das Verfahren zu ihrer Herstellung anzugeben, nämlich für stabile Förmkörper oder Platten, die einerseits einen wesentlich tieferen λ-Wert als solche auf Basis von offen- oder geschlossenzelligen geblähten Perliten bieten, ausserdem eine wesentlich tiefere Dichte aufweisen und dennoch eine solche Stabilität und Dauerhaftigkeit aufweisen, dass sie sich als Leichtbaumaterial für Anwendungen aller Art, für das Verbauen auf Innen- und Aussenwänden von Gebäuden eignen, oder in einer besonderen Ausführung als Brandschutzplatten einsetzbar sind.

Ausserdem sollen diese stabilen Förmkörper und Platten wesentlich kostengünstig herstellbar sein als solche auf Basis von offen- oder geschlossenzelligen geblähten Perliten, damit sie auch ökonomisch konkurrenzfähig gegenüber den etablierten Wärmedämmverfahren wie dem Auftragen von Dämmputz oder dem Anbauen von herkömmlichen Dämmplatten, etwa solchen aus extrudiertem Polystyrol und anderem Wärmedämm-Material, einsetzbar sind. Ebenso sollen sie als Brandschutz-Platten technisch überzeugen und preislich konkurrenzfähig sein. So ist es denn eine weitere Aufgabe der Erfindung, ein Verfahren anzugeben, nach welchem solche stabilen Formkörper oder Platten hergestellt werden können.

Schliesslich ist es eine Aufgabe der Erfindung, die Verwendung solcher stabiler Formkörper und Platten anzugeben, einerseits als Leichtbaumaterial für verschiedene Anwendungen und Einsätze, weiter in Form von Platten um eine bessere Wärmedämmung von Gebäudehüllen zu erzielen und andrerseits in einer anderen Ausführung auch, um einen verbesserten Brandschutz zu bieten.

Diese Aufgabe wird gelöst von Stabile Formkörpern und Platten als Leichtbaumaterial, zur Wärmedämmung und zur Verwendung als Brandschutz, die sich dadurch auszeichnen, dass sie aus wenigstens einem mineralischen Bindemittel mit wenigstens einem chemischen Zusatz in Form eines Sauerstoffbindemittels bestehen, welcher chemische Zusatz beim Anmachen mit Wasser Sauerstoff ausscheidet und einen Schäumungseffekt bewirkt, sodass das getrocknete Produkt eine Dichte von zwischen 40 bis 120 Gramm/Liter und einen Lambda-Wert unter 0.05 mW/mK aufweist.

Das Verfahren zur Herstellung von stabilen Formkörper und Platten als Leichtbaumaterial nach einem der Ansprüche 1 bis 8, zur Wärmedämmung und/oder zur Verwendung als Brandschutz, ist dadurch gekennzeichnet, dass
A. ein mineralisches Bindemittel zusammen mit einer Sauerstoff abspaltenden Komponente und einer weiteren Komponente, in der ein Katalysator vorliegt, mit Wasser angemacht wird, sodass ein Gastreibverfahren einsetzt, wobei die Menge des Katalysators die Schäumungsgeschwindigkeit und damit die Viskosität des Slurrys justiert, und das Bindemittel den Härtungsverlauf bestimmt,
B. je nach Einstellung des Härtungs-Schäumungsverlaufes in der Schaummasse bei hohen Rohdichten runde und bei niedriger Rohdichte polyederförmige Poren erzeugt werden, die sich gleichmässig über die gesamte Schäumungshöhe verteilen,
C. die Schaummasse in eine Form gegossen oder gepresst wird,
D. bei maximaler erreichter Schäumungshöhe der Härtungsprozess startet,
E. nach Aushärung der entstandene Schaumblock entformt wird, wonach das anschliessend getrocknete Produkt eine Dichte von zwischen 40 bis 120 Gramm/Liter und einen Lambda-Wert 0,030 bis 0.055 mW/mK aufweist.

Die Verwendung der erzeugten stabilen Platten zur Wärmedämmung erfolgt durch das Erstellen von Wandaufbauten innen oder aussen an Gebäuden zur Wärmedämmung und zum Brandschutz, indem die Formplatten auf eine gesäuberte, mit einem Putz egalisierte und hernach mit Klebemörtel versehene Innen- oder Aussenwand eines Gebäudes appliziert werden, bedarfsweise mechanisch an der Gebäudewand fixiert werden und hernach ein Unterputz mit Armierungsgewebe-Gitter auf Glasbasis aufgetragen wird und schliesslich ein Oberputz aufgebracht wird, der wahlweise mit einem Farbanstrich versehen wird. Eine weitere Verwendung besteht im Einsatz der Formkörper und Platten als Leichtbaumaterial für verschiedenste Zwecke.

Ein Bauwerk ist dadurch gekennzeichnet, dass es innen oder aussen mindestens einen Wandaufbau aufweist, welcher Formkörper oder Platten als Leichtbaumaterial zur Wärmedämmung oder zur Verwendung als Brandschutz nach obigem Anspruch enthält, die hergestellt sind nach dem ebenfalls oben definierten Verfahren zur Herstellung solcher stabiler Formkörper und Platten.

Anhand der Zeichnungen wird eine formstabile Platte und ihr Aufbau näher beschrieben wie auch ihre Verwendung für das Verbauen an Gebäudewänden erläutert. Der Aufbau irgendeines dreidimensionalen Formkörpers sowie auch seine Herstellung sind im Wesentlichen identisch.

Es zeigt:
- Figur 1: : Eine formstabile Platte aus dem homogenen Gemisch aus mineralischem Bindemittel mit chemischen Zusätzen für die Schaumbildung und hydrophobe Eigenschaft;
- Figur 2: : Den Aufbau einer Ausführung der formstabilen Platte als Laminat, in einem Querschnitt;
- Figur 3: : Den Aufbau einer Sandwich-Platte in einem Querschnitt;
- Figur 4: : Den Aufbau einer formstabilen Platte, bei welcher eine Flachseite und eine Schmalseite von einer armierenden Verstärkungsschicht oder einer zusätzlichen Isolationsschicht eingefasst sind;
- Figur 5: : Den Aufbau einer formstabilen Platte mit mehreren plattenartigen Kernen, die mittels Dübeln verbunden sind, und bei welcher eine Flachseite und alle Schmalseiten von einer armierenden Verstärkungsschicht eingefasst sind;
- Figur 6: : Den ersten Arbeitsschritt für das Wärmedämmen einer verputzten Altbau-Wand - Entfernen des alten Putzes und säubern;
- Figur 7: : Den zweiten Arbeitsschritt für das Ausrüsten einer verputzten Altbau-Wand mit formstabilen Wärmedämm-Platten - und das Egalisieren der Wand mittels eines Putzes;
- Figur 8: : Den dritten Arbeitsschritt für das Ausrüsten einer verputzten Altbau-Wand mit einer Wärmedämmung - mit Aufbringen eines Klebemörtel-Aufstrichs und Applizieren von formstabilen Wärmedämm-Platten auf den noch feuchten Klebemörtel und wenn nötig fixeren;
- Figur 9: : Den vierten Arbeitsschritt für das Ausrüsten einer verputzten Altbau-Wand mit Wärmedämmplatten - mit dem Aufbringen eines Unterputzes mit darin integriertem armierenden Netz;
- Figur 10: : Den fünften Arbeitsschritt - Aufbringen eines Feinputzes und bedarfsweise Auftragen eines Farbanstrichs.

Gemäss einem bekannten Verfahren mit mehrstufigem Glühen auf Temperaturen von ca. 800°C bis 1'400°C lässt sich Perlit auf das 10-15fache Volumen aufblähen, sodass die Dichte des Blähproduktes bloss noch 50 - 400 kg/m³ beträgt, also ein aussergewöhnlich leichtes Gewicht. Es bietet sich daher stark an, als Dämm-produkt angewendet zu werden. Das Verfahren zur Herstellung geschlossenzelliger geblähter Perlite erfolgt mehrstufig und ist im Detail in WO 20136/053635 A1 beschrieben. 300 Gramm/Liter aufweisen. Mit dem Verfahren gemäss WO2013/053635 gelingt es, geschlossenzelliges Perlit mit einem im Trockenzustand tiefen Schüttgewicht von weniger als ca. 50 bis 400 Gramm/Liter zu erzeugen. Grundsätzlich wird der Dämmeffekt erhöht, wenn in die Platte möglichst viel Luft eingebracht wird. Es hat sich gezeigt, dass der Luftanteil in der Dämmplatte dadurch erhöht werden kann, dass beim Anmachen bzw. Aufmischen des mineralischen Bindemittels gezielt ein Schäumungsmittel eingebracht wird. Die glasierten, an ihrer Oberfläche geschlossenzelligen, mit Luft gefüllten Kugeln aus expandierten Silicasanden werden grundsätzlich mit einem mineralischen Bindemittel gemischt, das zudem optional mit einem Schäumungsmittel versetzt und mit Wasser angemacht wird. Wahlweise kann den geschlossenzelligen Perliten bis zu etwa 10% ihres Volumenanteils Aerogel in Pulverform beigemischt werden. Als Bindemittel für Wärmedämmzwecke eignen sich mineralische wie auch organische Bindemittel, als Beispiel etwa Polymere, Epoxid, Vinylester, Phenolharze und andere. Diese Bindemittel können homogene Bindemittel oder auch Mischungen verschiedener Bindemittel sein, etwa solche aus Phosphaten, Zementen, Gips, Wasserglas, Kalk, pH-neutralem Kieselsöl oder aus anderen mineralischen Bindemitteln. Wahlweise können weitere geeignete Zusatzstoffe beigemischt werden. Als solche eignen sich zum Beispiel Steinmehl, Flugasche, Gesteinsmehle, Blähglimmer, Blähton, offenporige Perlite, etc. Alle Komponenten werden mit dem geschlossenzelligen Blähperlit zu einer homogenen Mischung gemischt und hernach in eine Form gepresst oder gegossenen bzw. geschüttet, wonach das Gemisch darin ausgehärtet. Durch die optionale Schäumung wird erreicht, dass die Platte als Ganzes je nach spezifischer Zusammensetzung aller Komponenten infolge der Luft in den geblähten Perliten sowie der Luft aus dem Schäumungsmittel eine Dichte von zwischen 120kg/m³ bis 1200kg/m³ aufweist.

Solche Dämmplatten bildeten den Ausgangspunkt für die vorliegende Erfindung. Es hat sich nun überraschend gezeigt, dass sich Formkörper und Platten als Leichtbaumaterial, zur Wärmedämmung und zur Verwendung als Brandschutz auch unter kompletter Weglassung jeglicher Anteile an geblähtem Perlit realisieren lassen, indem sie einzig aus einem mineralischen Bindemittel bestehen, das im einfachsten Fall mit chemischen Zusätzen versetzt ist, welche bei Verbindung mit Wasser zu einem Sauerstoffaustrag führen, sodass ein Schäumungseffekt erzielt wird und eine Schaummasse entsteht, die aus lauter kleinen, geschlossenen Bläschen besteht, also ein eigentlicher Schaum, dessen Bläschenwände die einzigen mechanisch verbleibenden Anteile sind, welche die Festigkeit der Struktur sichern, aber aufgrund ihrer Vielzahl und ihrer amorphen Anordnung eine hinreichende Festigkeit des Formkörpers oder der Platte bewirken.

Das Einbringen dieses Schäumungsmittels als Luftporenbilder geschieht, indem es dem mineralischen Bindemittel beigegeben und durch das Mischen zusammen mit dem mineralischen Bindemittel mit Wasser aufschäumt. Im Einzelnen wird ein mineralisches Bindemittel zusammen mit einer Sauerstoff abspaltenden Komponente, zum Beispiel Wasserstoffperoxid, und einem Katalysator, zum Beispiel Braunstein, in einer Mischanlage mit Wasser angemacht, wonach ein Gastreibverfahren einsetzt. Die Schäumungshöhe ist dabei ein Indikator für die Rohdichte. Der entstehende Schaum wird in eine Form gegossen oder gepresst. Die Menge des zugegebenen Katalysators bestimmt die Schäumungsgeschwindigkeit und damit kann auch die Viskosität des entstehenden Schaums oder Slurrys justiert werden. Dies hat den Vorteil, dass je nach Anwendung der niedrig viskose Slurry in kleine Spaltmasse eindringen kann und anschliessend hochschäumt und sich verdichten kann. Andererseits kann eine hochviskose Mischung mit einem hohen Porenvolumen über einen kontinuierlichen Mischer als stabiler Schaum die Mischanlage verlassen. Die Schäumungsgeschwindigkeit wird auf den Härtungsverlauf des Bindemittelsystems abgestimmt. Das bedeutet, dass bei maximaler Schäumungshöhe der Härtungsprozess startet. Bei optimaler Einstellung des Härtungs-Schäumungsverlaufes werden je nach Rohdichte bei höheren Rohdichten runde Poren ausgebildet, und bei niedrigen Rohdichten polyederförmige Poren ausgebildet. Die rund-polyederförmigen Porenausbildungen sind gleichmässig verteilt über die gesamte Schäumungshöhe vorhanden. Diese gleichmässige Porenausbildung bietet den Vorteil, dass nach Austrockung beim Sägen oder Schneiden der entstandenen Blöcke zu Platten die Schnittausrichtung nicht beachtet werden muss, da die Platten von allen Seiten gleich belastet werden können. Das ist zum Beispiel bei Gasbetonschäumungen nicht der Fall, denn dort sind die Poren in der Treibrichtung länglich verzerrt und daher nicht in jeder Richtung gleich stark belastbar. Bei den Bindemitteln auf Polymer- oder Geopolymerbasis handelt es sich um solche auf der Basis von alkaliaktivierten Stoffen wie Metakaolin, Flugasche, Hüttensand, etc. mit Wasserretentionsmitteln und Oberflächenaktivstoffen versetzt, sowie um Mischungen mit amorphen Kieselsäuren etc. Hernach härtet diese aufgeschäumte Mischung durch Trocknung aus. Der Wasseranteil verdampft dabei und zurück bleibt ein Formkörper oder eine Platte. Nach der Härtung des Schaumes wird entformt, wonach das anschliessend vollständig getrocknete Produkt eine Dichte von zwischen 40 bis 120 Gramm/Liter und einen Lambda-Wert 0,030 bis 0.055 mW/mK aufweist. Das Überraschende ist aber der von einem solchen Formkörper oder einer solchen Platte erreichte Lambda-Wert von unter 0.055 mW/mK. Luft ist einer der besten Wärmedämmer und weil diese sehr leichten Formkörper und Platten zu einem sehr grossen Anteil aus Luft bestehen, erklärt sich daraus der enorm tiefe Lambda-Wert wie ihn wohl bisher kein Baustoff bieten konnte. Derartige Formkörper und Platten eignen sich daher hervorragend zum Ersetzen von Polystyrol im Bauwesen, denn dieses kommt durch seine schlechten Eigenschaften im Brandfall zunehmend und Druck.

Die so hergestellten Formkörper oder Platten, mit oder ohne zusätzliche hydrophobe Beschichtung, sind in jedem Fall steif und formstabil und weisen eine überraschend gute Stabilität auf, sodass eine besondere Verstärkungsschicht oder eine zusätzliche spezifische Dämmschicht für die meisten Anwendungen nicht notwendig ist. Es werden Druckfestigkeiten von 0.4 bis 5 N/mm² erreicht. Diese Werte wurden bisher im praktischen Versuch ermittelt. Optional kann wahlweise noch ein Aerogel-Faservlies homogen zugegeben werden, oder im Rahmen eines laminatartigen Schichtaufbaus kann eine Schicht aus Aerogel-Pulver in den Schichtaufbau der Platte eingefügt werden.

Falls besonders steife Formkörper oder Platten mit erhöhter Stabilität erforderlich sind, können sie optional mit zusätzlichen Stabilisierungsschichten in Form einer Gitterstruktur als armierende Verstärkungsschicht ausgerüstet sein. Eine solche Verstärkungsschicht kann auf einer der Flachseiten der Platte, oder auf beiden Flachseiten aufgebracht werden, oder auch die Oberflächen eines Formkörpers einfassen. Als Zwischenschicht ins Innere einer Platte oder eines Formkörpers kann beispielsweise eine Aerogel-Vliesschicht als zusätzliche Dämmschicht eingebaut werden, sodass ein Laminat-Schichtaufbau erzeugt wird. Als Option können Verankerungssysteme im Innern der Formkörper oder Platten eingebaut sein, indem etwa Dübel den Schichtaufbau quer zu den Schichten verlaufend annähernd durchsetzen.

Die Wasseraufnahme-Fähigkeit dieser Formkörper oder Platten ist äusserst gering, denn sie bestehen ja aus lauter aneinander hängenden wasserundurchlässigen Bläschen. Wenn von Beginn weg zusätzlich auch ein chemischer Zusatz in Form eines Hydrophobisierungsmittel dem mineralischen Bindemittel beigegeben wird, so sind die Bläschenwände selbst wasserabweisend und der ganze Formkörper oder die Platte sind insgesamt hydrophob, während sie durch eine Verringerung der Zugabe von Hydrophobisierungsmittel oder durch dessen Weglassung eine hinreichende Dampfdurchlässigkeit erreichen, was wichtig für das Innenklima eines Bauwerkes ist. Werden hingegen komplett wasserdichte und völlig dampfundurchlässige Formkörper oder Platten gewünscht, so können ihre Oberflächen zusätzlich mit einem Hydrophobierungsmittel behandelt werden.

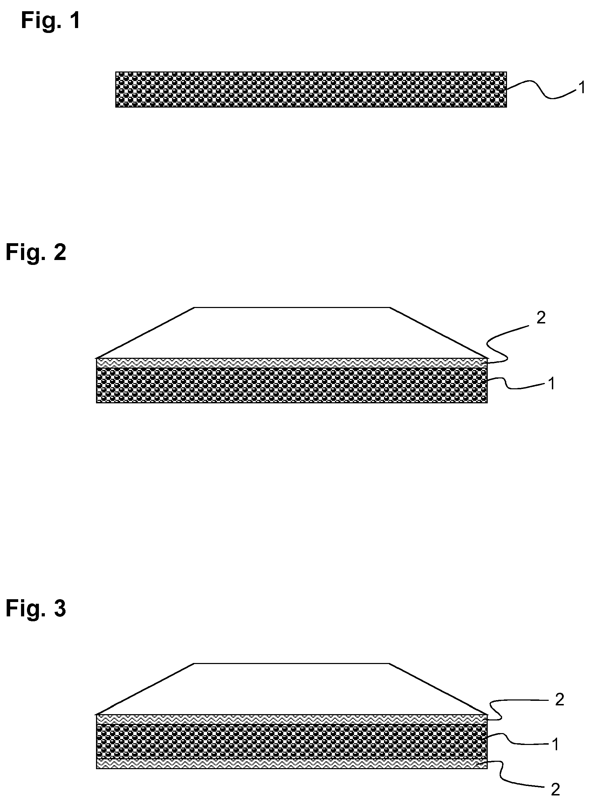

In Figur 2 ist die formstabile Platte mit einer Verstärkungsschicht oder Aerogel-Vliesschicht versehen und im Querschnitt dargestellt. Sie dient zum Erstellen einer Wärmedämmung an Gebäudehüllen, wobei das natürlich auch mit blossen Dämmplatten ohne besondere Verstärkungsschicht geht. Als Besonderheit weist die hier dargestellte Dämmplatte jedoch einen Laminat-Aufbau aus mindestens zwei Schichten auf, nämlich einen plattenartigen Kern 1 aus mit Wasser angemachtem mineralischen Bindemittel mit Sauerstoff ausscheidenden chemischen Zusätzen, was zu einem homogenen Gemisch angemacht wurde und welches dann aushärtete. Das Gewicht dieser Kerne 1 ist extrem gering - 40 bis 120 Gramm pro Liter, und ihr λ-Wert tiefer als 0.055 W/mK, und somit wesentlich tiefer als jener einer zudem teureren EPS-Dämmplatte. Insgesamt aber bleibt die so erhaltene formstabile Platte stets luft- bzw. dampfdurchlässig. Mindestens eine der Flachseiten des plattenartigen Kerns 1 ist im gezeigten Beispiel mit einer Gitterstruktur 2 als armierende Verstärkungsschicht ausgerüstet, oder mit Aerogel-Vlies-Schicht ausgerüstet. Diese Gitterstruktur 2 kann schon im Herstellungsprozess des Verleimens mittels einer mineralischen Klebstoffmischung, zum Beispiel auf Wasserglasbasis, oder Kalk- oder/und Kalk- und Zementbasis oder mittels des Verglasens mit dem entstehenden Kern verbunden werden, indem sie in den Boden der kastenförmigen Pressform gelegt wird, in welcher der Kern verfestigt wird, sodass sie dann an diesem Kern bereits anhaftet und ihn verstärkt. Bei dieser Gitterstruktur kann es sich um Gewebe, ein Gelege, eine netzartige Gitterstruktur oder ein Vlies handeln. Das Material für diese Verstärkungsschicht kann zum Beispiel Zellulose oder Glas sein, oder es werden natürliche oder synthetische Fasern eingesetzt. Ein Laminat-Aufbau kann auch erzielt werden, indem ein plattenartiger Kern aus glasierten und somit an ihrer Oberfläche geschlossenen, mit Luft gefüllten Kugeln aus expandiertem Silicasand bzw. geblähtem Perlit an der Oberfläche durch Verkleben oder durch Verschweissen der glasierten Oberflächen mit einer Gitterstruktur als armierende Verstärkungsschicht ausgerüstet wird, wonach mehrere solchermassen ausgerüstete verstärkte Platten mittels Verkleben oder Verschweissen zu einem Laminat verbunden werden.

Die Figur 3 zeigt eine formstabile Platte als Wärmedämmplatte, die eine effektive Sandwich-Bauweise zeigt, aus drei Schichten, wobei die mittlere, "eingeklemmte" Schicht der plattenförmige Kern 1 ist, der aus dem mineralischen Bindemittel mit seinen chemischen Zusätze für die Schaumbildung besteht. Die Verstärkungsschichten oder auch Aerogel-Vliesschichten 2 an den beiden einander gegenüberliegenden Flachseiten dieser Wärmedämmplatte können aus unterschiedlichen Materialien und Aufbauten oder auch identisch gebaut sein. Es versteht sich, dass auch Platten mit abwechslungsweise mehreren Verstärkungs- oder Aerogel-Vliesschichten 2 und mehreren Kernen 1 gebaut werden können. Die gesamte Stärke der einfachsten, zweischichtigen formstabilen Platten misst ca. 10-40mm, was aber nicht bedeutet, das nicht auch noch dickere Platte hergestellt werden können.

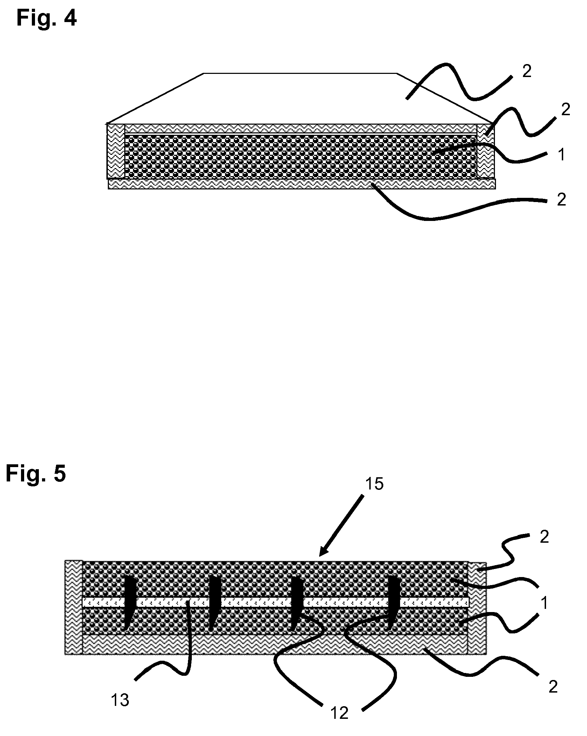

Die Figur 4 zeigt eine Variante der formstabilen Platte als Wärmedämmplatte, bei welcher eine Flachseite und alle Schmalseiten von einer armierenden Verstärkungsschicht 2 eingefasst sind. Diese Verstärkungsschicht 2 kann zum Beispiel aus Zellulose-Glas bestehen. Weitere Möglichkeiten bieten Verstärkungsschichten 2 aus natürlichen Fasern oder synthetischen Fasern. Vorteilhaft werden solche Verstärkungsschichten 2 als Gelege, Gewirk oder als Vlies auf dem plattenartigen Kern mechanisch befestigt oder sie werden auf ihn aufkaschiert. Eine weitere Variante besteht darin, dass die Verstärkungsschicht 2 in einem Kalk-Mörtel oder zementösen Mörtel eingebunden ist, der auf den verstärkten Seiten des plattenartigen Kerns 1 haftet.

Die Figur 5 zeigt den Aufbau einer formstabilen Platte als Wärmedämmplatte mit mehreren plattenartigen Kernen 1, die mittels Dübeln 12 verbunden sind, und bei welcher eine Flachseite und alle Schmalseiten von einer armierenden Verstärkungsschicht 2 eingefasst sind. Die einzelnen plattenartigen Kerne 1 können aus unterschiedlichen Materialien bestehen, und sie sind wenigstens auf einer Flachseite mit einem aufkaschierten Vlies 13 versehen. Die in Figur 5 gezeigte Platte wird wie folgt aufgebaut: Zunächst wird ein Kasten aus einem Material erzeugt, der später als die Platte umfassende Verstärkungsschicht wirkt. Dann wird als erstes ein plattenartiger Kern 1 als homogene Dämmplatte erzeugt, die in ihrem Volumen zu ca. 80% bis 90% aus Luft und zu 10% bis 20% Massenanteil aus mineralischem Bindemittel ursprünglich enthaltend die chemischen Zusätze besteht, in den Kasten eingefüllt. Als nächstes wird ein Vlies 13 auf diese Dämmstoffplatte in den Kasten eingelegt, und dann werden Dübel 12 durch das Vlies 13 in diese Dämmplatte eingesteckt, weil sonst keine mechanische Verbindung erfolgt. Dann wird ein zweiter plattenartiger Kern 1 aus dem erwähnten homogenen, ausgehärteten Gemisch über diese Dübel 12 gesteckt und im Kasten verpresst. Schliesslich kann er oben mit einer weiteren Verstärkungsschicht 15 versiegelt werden. Hierfür eignet sich eine Verstärkungsschicht 15 aus einem Kalk- Mörtel oder einem zementösen Mörtel.

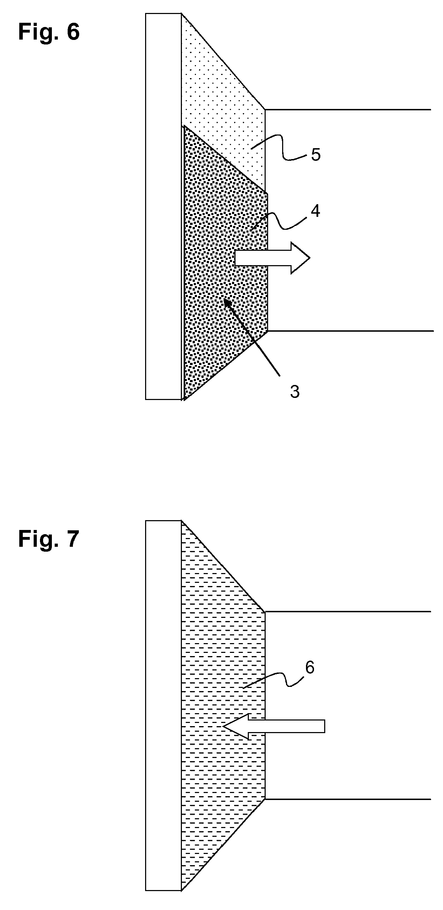

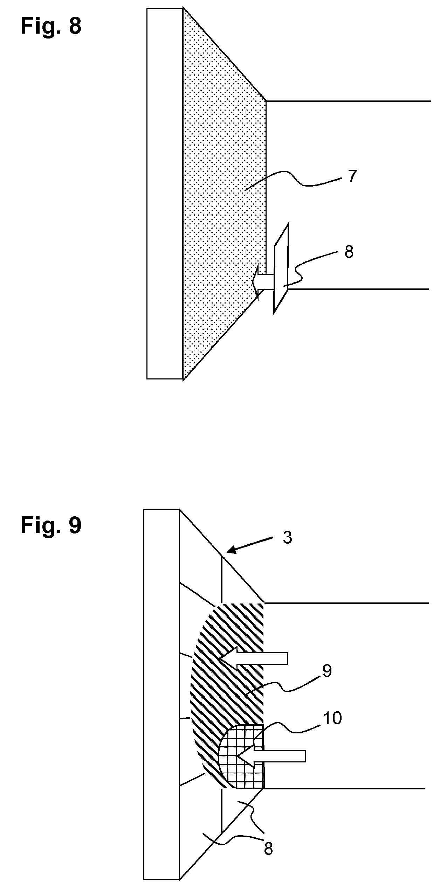

Ab Figur 6 wird nun dargestellt, wie eine solche formstabile Platte als Wärmedämmplatte für die Ausrüstung einer Innenwand 3 eingesetzt wird. Das Gleiche gilt auch für eine Aussenwand. Zunächst wird der alte Putz 4 einer Innenwand 3 von derselben entfernt, und der Untergrund 5 wird gesäubert und getrocknet, damit eine staubfreie Unterlage vorliegt. Dann wird wie in Figur 7 gezeigt das freigelegte Mauerwerk mit einem Putz 6 egalisiert, sodass eine perfekt ebene Unterlage für den nächsten Arbeitsschritt und das Verlegen der Wärmedämmplatten vorbereitet ist. In einem nächsten Schritt, wie in Figur 8 gezeigt, wird ein Klebemörtel 7 auf diese Putz-Unterlage 6 aufgetragen. Dieser Klebemörtel 7 kann ein Kalkmörtel oder ein zementöser Mörtel oder zementöser Kalkmörtel sein. Er wird eben ausprofiliert, um eine perfekt ebene Unterlage für die satt aufliegende Aufnahme der Wärmedämmplatten 8 zu schaffen. Als Nächstes folgt das Auflegen der Wärmedämmplatten 8 wie dargestellt. Idealerweise messen die Wärmedämmplatten 8 ca. 40cm x 60cm, sodass sie leicht zu handhaben und zu transportieren sind. Sie werden einfach auf den noch weichen Klebemörtel 7 an der Wand aufgedrückt und haften dann an demselben, weil sie ja so ungewöhnlich leicht sind. Es wird vorteilhaft unten in einer Ecke gestartet, und die Wärmedämmplatten 8 können dann aufeinander aufgeschichtet an die Wand gedrückt werden. Dabei wird darauf geachtet, dass keine Hohlräume hinter den Platten 8 entstehen, indem die Unterlage möglichst eben vorbereitet wird. Wenn besonders dicke oder mehrlagige Wärmedämmplatten 8 von zum Beispiel 30mm Stärke oder mehr eingesetzt werden, so können diese mit zusätzlichen Befestigungssystemen in bekannter Manier im Traggrund verankert werden, wie das für konventionelle Polystyrol-Wärmedämmplatten schon lange praktiziert wird.

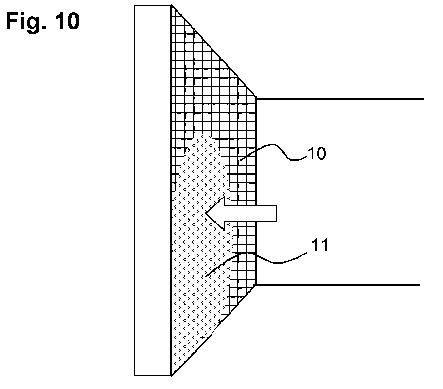

Als nächster Schritt wird wie in Figur 9 gezeigt zunächst Unterputz 9 auf Kalk- oder Zementbasis auf die Wärmedämmplatten 8 aufgetragen, und in diesen wird ein Armierungsgewebe 10 auf Glasbasis mit alkaliresistenter Beschichtung eingearbeitet. Nach dem Aushärten dieses Unterputzes 9 mit dem Stützgewebe 10 im Innern wird wie in Figur 10 gezeigt noch ein Oberputz 11 aufgetragen. Dieser kann hernach je nach Wunsch auch als Unterlage für eine Tapezierung dienen, oder mit einer Struktur für das gewünschte Raumambiente versehen werden, oder aber auch einen offenporigen Anstrich mit vorzugsweise einer Silikatfarbe erhalten. In jedem Fall bleibt der ganze Aufbau auf der Wand dampfdurchlässig. Es wird damit eine aussergewöhnlich gute Wärmeisolation mit hervorragendem λ-Wert erzeugt.

Die primäre Aufgabe eines Wärmedämmputzes ist eben die Wärmedämmung. Ein traditioneller Wärmedämmputz auf Perlit- oder Styroporbasis weist eine Wärmeleitzahl oder einen Lambdawert von ca. 70-120 mW/mK auf. Die Wärmedämmplatte mit dem vorgestellten mineralischen Bindemittel und dem Sauerstoff-Ausscheider jedoch weist einen λ-Wert von weniger als 0.055mW/mK auf. Das heisst, es braucht eine weit geringere Schichtstärke im Vergleich zu einem herkömmlichen Wärmedämmputz, um eine identische Wärmedämmung zu erzielen, oder bei gleichere Schichtdicke wird die Wärmedämmung vervielfacht. Traditionelle Wärmedämmputze werden in der Praxis üblicherweise in Schichtstärken von 30mm bis 80mm als Innen- oder Aussenputze aufgebracht. Im neuen System wird mittels der laminat- oder sandwichartigen Wärmedämmplatten 8 die Gesamtschichtstärke des Wandaufbaus in der Regel massgeblich reduziert. Eine solche Wärmedämmplatte von wenigen mm Stärke bringt nämlich den gleichen Wärmedämmwiderstand wie ein 30mm starker Wärmedämmputz der neuesten Generation. Dazu kommt der enorme Vorteil des superleichten Gewichtes dieser Wärmedämmplatten, was ihre Handhabung und Montage zu einem wahren Genuss macht. Aufgrund der wesentlich geringeren Wandaufbau-Stärke bleibt auf der Innenseite des Bauwerkes letztlich entschieden mehr Nutzraum zur Verfügung. Die Räume werden um mehrere cm länger. Zusätzlich können die Wärmedämm-Arbeiten mit diesen Wärmedämmplatten 8 in äusserst kurzer Zeit bewältigt werden. Eine Austrocknungszeit von etwa 30 Tagen - wie für übliche Wandaufbauten mit Wärmedämmputzen von 30mm Stärke nötig - muss nicht abgewartet werden.

Eine weitere Verwendung dieser stabilen Formkörper und Platten ist im Leichtbau zu sehen, so die speziellen Eigenschaften dieses Materials zum Tragen kommen, nämlich:
- Sehr geringe Dichte
- hohe Stabilität, mit zusätzlicher innerer oder äusserer Armierung hochstabil
- kaum wasserdurchlässig oder wenn hydrophob beschichtet dauerhaft komplett wasser- und dampfdicht
- geringe Herstellkosten
- schneidbar mit Fräsblättern oder Schneiddrähten
- in jede Form giess- oder pressbar
- mehrere Formkörper oder Platten zu stabilen Gebilden verleimbar oder mechanisch verbindbar
Angesichts dieser Eigenschaften eröffnet sich ein weites Feld von möglichen Anwendungen. So können Wasserkanäle gebaut werden, Bojen, schwimmende Stege oder Flosse, Trockendocks, Bootskörper, schnell zu errichtende Notbauten wie Baracken und Hütten. Diese Bauten können zum Beispiel mittels Drahtseilen verspannt werden, sodass sie hoch erdbebensicher sind.

Eine weitere Verwendung dieser formstabilen Platten ist im Brandschutz zu sehen, wobei sie hierfür im Wesentlichen aus den gleichen Komponenten bestehen, aber in einem anderen Mischungsverhältnis eingebracht werden. Bei einer Brandschutzplatte geht es darum, grosse Hitze - hohe Temperaturen - möglichst lange von der dem Brand abgewandten Seite der Brandschutzplatte fernzuhalten. Dazu sollte die Dichte der Platte hoch sein, damit die Platte aufgrund ihres Materials und dessen Masse endotherme Eigenschaften aufweist, dass heisst bei Hitzeeinwirkung grosse Energiebeträge aufnehmen kann und aufgrund der Abspaltung von großen Mengen an Wasser dieses ausgedampft wird, sowie günstige Reaktionsprodukte für den Brandschutz erzeugt werden. Eine Kühlwirkung des Systems ist die Folge. Setzt man wie bisher oftmals praktiziert eine Steinwolle mit einer Harzkomponente für die Formgebung und -erhaltung ein, so wirkt sich das Harz im Brandfall negativ aus, indem beissender Rauch entsteht. Weitere herkömmliche Basisstoffe sind zum Beispiel Werkstoffe auf der Basis von Gips, Zement, Calziumsilikat, Blähglimmer, Blähton ein. Als Bindemittel dienen Wasserglas, Gips, Phosphate und Zement, im Speziellen Magnesiumzement oder Glaszement. Eine Brandschutzplatte sollte so leicht wie möglich und aber unbedingt so schwer wie nötig sein, bei bestmöglichen Brandschutz-Eigenschaften. Die vorliegende formstabile Platte ist hierzu vorzugsweise wie folgt zusammengesetzt: Ein Anteil besteht wiederum aus einem mineralischen Bindemittel, jedoch mit einem bedeutend geringeren Anteil von chemischen Substanzen für den Sauerstoffaustrag, welcher dann in entsprechend bescheideneren Umfang erfolgt. Die Dichte der so erzeugen Körpers wird entsprechend höher ausfallen, zum Beispiel 400kg/m³ bis 1200 kg/m³, und die Wärmedämmung schlechter. Mineralische Bindemittel können Wasserglas, Phosphate, Zemente wie Magnesiumzement oder Glaszement, Gips etc. sein. Eine formstabile Platte für den Einsatz als Brandschutzplatte sollte trotzdem so leicht wie möglich und aber unbedingt so schwer wie nötig sein, um bestmögliche Brandschutz-Eigenschaften zu bieten. Solche Platten werden als Brandschutz in Türen oder in Lüftungskanäle etc. eingesetzt.

Alle diese formstabilen Formkörper und Platten, ob für den Leichtbau, die Wärmedämmung oder für den Brandschutz, können zusätzlich mit armierenden Fasern ausgerüstet werden, indem diese Fasern zum Beispiel als lose Filamente in das Material eingemischt werden, wonach die Platte dann gepresst oder gegossen wird und dann aushärtet. Bei solchen armierenden Fasern kann es sich zum Beispiel um Stapelfasern oder Kurzschnittfasern handeln, etwa mit Fasern aus Glas, Acryl oder anderen Kunststoff-Fasern, oder es können auch metallische Fasern sein.

## Patentansprüche

1. Stabile Formkörpern und Platten als Leichtbaumaterial, zur Wärmedämmung und zur Verwendung als Brandschutz, ***dadurch gekennzeichnet,* dass** sie aus wenigstens einem mineralischen Bindemittel mit wenigstens einem chemischen Zusatz in Form eines Sauerstofifbindemittels bestehen, welcher chemische Zusatz beim Anmachen mit Wasser Sauerstoff ausscheidet und einen Schäumungseffekt bewirkt, sodass das getrocknete Produkt eine Dichte von zwischen 40 bis 120 Gramm/Liter und einen Lambda-Wert unter 0.05 mW/mK aufweist.

2. Stabile Formkörper und Platten als Leichtbaumaterial, zur Wärmedämmung und zur Verwendung als Brandschutz nach Anspruch 1, ***dadurch gekennzeichnet,* dass** das mineralische Bindemittel ein mineralisches Polymer bzw. Geopolymer oder Wasserglas ist, und der als Schaumbildner wirkende chemische Zusatzstoff ein Wasserstoffperoxid ist und als Katalysator Braunstein als Komponente enthalten ist.

3. Stabile Formkörper und Platten als Leichtbaumaterial, zur Wärmedämmung und zur Verwendung als Brandschutz nach einem der vorangehenden Ansprüche, ***dadurch gekennzeichnet,* dass** sie zusätzlich zugemischte Füllstoffe enthalten..

4. Stabile Formkörper und Platten als Leichtbaumaterial, zur Wärmedämmung und zur Verwendung als Brandschutz nach einem der vorangehenden Ansprüche, ***dadurch gekennzeichnet,* dass** dem mineralischen Bindemittel nebst dem als Schaumbildner wirkenden chemischen Zusatzstoff ein Hydrophobisierungsmittel zugesetzt ist.

5. Stabile Formkörper und Platten als Leichtbaumaterial, zur Wärmedämmung und zur Verwendung als Brandschutz nach einem der vorangehenden Ansprüche, ***dadurch gekennzeichnet,* dass** wenigstens einer oder mehrere Füllstoffe aus Leichtmaterialien bestehen, beispielsweise offen- oder geschlossenzellige Perlite, Vermiculit oder keramische Hohlkugeln wie Cenospheres oder Microspheres.

6. Stabile Formkörper und Platten als Leichtbaumaterial, zur Wärmedämmung und zur Verwendung als Brandschutz nach einem der vorangehenden Ansprüche, ***dadurch gekennzeichnet, dass*** sie armierende Fasern zur Erhöhung ihrer mechanischen Festigkeit enthalten.

7. Stabile Formkörper und Platten als Leichtbaumaterial, zur Wärmedämmung und zur Verwendung als Brandschutz nach einem der vorangehenden Ansprüche, ***dadurch gekennzeichnet,* dass** im Fall von Platten mindestens die eine Flachseite des plattenartigen Kerns (1) der Platten mit einer Gitterstruktur als armierende Verstärkungsschicht (2) aus Zellulose und/oder Glas, aus natürlichen Fasern oder synthetischen Fasern oder einer Kombination dieser Stoffe ausgerüstet ist, und diese als Gelege, Gewirk oder als Vlies mechanisch befestigt oder auf aufkaschiert ist, oder ein Aerogel-Faservlies als Isolationsschicht mechanisch befestigt oder aufkaschiert ist.

8. Stabile Formkörper und Platten als Leichtbaumaterial, zur Wärmedämmung und zur Verwendung als Brandschutz nach einem der vorangehenden Ansprüche, ***dadurch gekennzeichnet,* dass** sie einen Schichtaufbau aufweisen, und je eine wärmedämmende Zwischenschicht aus Aerogel-Faservlies zwischen die aufeinanderliegenden Schichten einkaschiert ist, die einzelnen Schichten aufeinandergepresst sind und mit sie durchsetzenden Dübeln gesichert sind.

9. Verfahren zur Herstellung von stabilen Formkörper und Platten als Leichtbaumaterial nach einem der Ansprüche 1 bis 8, zur Wärmedämmung und/oder zur Verwendung als Brandschutz, ***dadurch gekennzeichnet,* dass**
A. ein mineralisches Bindemittel zusammen mit einer Sauerstoff abspaltenden Komponente und einer weiteren Komponente, in der ein Katalysator vorliegt, mit Wasser angemacht wird, sodass ein Gastreibverfahren einsetzt, wobei die Menge des Katalysators die Schäumungsgeschwindigkeit und damit die Viskosität des Slurrys justiert, und das Bindemittel den Härtungsverlauf bestimmt,
B. je nach Einstellung des Härtungs-Schäumungsverlaufes in der Schaummasse bei hohen Rohdichten runde und bei niedriger Rohdichte polyederförmige Poren erzeugt werden, die sich gleichmässig über die gesamte Schäumungshöhe verteilen,
C. die Schaummasse in eine Form gegossen oder gepresst wird,
D. bei maximaler erreichter Schäumungshöhe der Härtungsprozess startet,
E. nach Aushärung der entstandene Schaumblock entformt wird, wonach das anschliessend getrocknete Produkt eine Dichte von zwischen 40 bis 120 Gramm/Liter und einen Lambda-Wert 0,030 bis 0.055 mW/mK aufweist.

10. Verfahren nach Anspruch 9, ***dadurch gekennzeichnet,* dass** im Schritt A ein mineralisches Bindemittel mit einem chemischen Zusatz in Form eines Sauerstoffbindemittels sowie zusätzlich enthaltend ein Hydrophoboisierungsmittel mit Wasser angemacht wird, sodass nach Schritt E nach Austrocknung der Formkörper oder die Platte durchgängig, d.h. aussen und in ihrer inneren Struktur hydrophob ist.

11. Verfahren nach einem der Ansprüche 9 bis 10, ***dadurch gekennzeichnet,* dass** nach Schritt E der Formkörper oder die Platte mit einem Hydrophobisierungsmittel beschichtet oder imprägniert wird.

12. Verfahren nach einem der Ansprüche 9 bis 11, ***dadurch gekennzeichnet,* dass** im Falle von Platten nach Aushärtung des mineralischen Bindemittels mindestens eine Flachseite des plattenartigen Kerns (1) der Platten mit einer Gitterstruktur als armierende Verstärkungsschicht (2) aus Zellulose-Glas, aus natürlichen Fasern oder synthetischen Fasern oder einer Kombination dieser Stoffe als Gelege, Gewirk oder als Vlies mechanisch an der Dämmplatte befestigt oder auf sie aufkaschiert wird.

13. Verwendung von stabilen Formkörpern und Platten nach einem der Ansprüche 1 bis 8 und hergestellt nach einem der Verfahren nach Anspruch 9 bis 12, zum Erstellen von Wandaufbauten innen oder aussen an Gebäuden, indem Dämmplatten (8) auf eine gesäuberte, mit einem Putz (6) egalisierte und hernach mit Klebemörtel (7) versehene Innen- oder Aussenwand (3) eines Gebäudes appliziert werden, bedarfsweise mechanisch an der Gebäudewand (3) fixiert werden und hernach ein Unterputz (9) mit Armierungsgewebe-Gitter (10) auf Glasbasis aufgetragen wird und schliesslich ein Oberputz (11) aufgebracht wird, der wahlweise mit einem Farbanstrich versehen wird.

14. Bauwerk, ***dadurch gekennzeichnet,* dass** es innen oder aussen mindestens einen Wandaufbau aufweist, welches Dämmplatten (8) nach einem der Ansprüche 1 bis 8 enthält, hergestellt nach einem der Verfahren nach Anspruch 19 bis 12.

15. Bauwerk aus Leichtbaumaterial wie Wasserkanäle, Bojen, schwimmende Stege oder Flosse, Trockendocks, Bootskörper, schnell zu errichtende Notbauten wie Baracken und Hütten, ***dadurch gekennzeichnet,* dass** es aus stabilen Formkörpern oder Platten nach einem der Ansprüche 1 bis 8 besteht oder solche enthält, die nach einem der Verfahren nach Anspruch 9 bis 12.
